# EUROPEAN PATENT SPECIFICATION

(11) **EP 2 793 375 B1**
(45) Date of publication and mention of the grant of the patent: **28.03.2018**
(21) Application number: 13163700.1
(22) Date of filing: 15.04.2013
(51) Int. Cl.: H02K 9/19, H02K 9/22

(54) **A stator for an electrical machine of a mobile working machine**
Stator für eine elektrische Maschine einer mobilen Arbeitsmaschine
Stator pour une machine électrique d'une machine de travail mobile

(43) Date of publication of application: 22.10.2014
(73) Proprietor: Visedo Oy, 53600 Lappeenranta (FI)
(72) Inventor: Naumanen, Ville, 53830 Lappeenranta (FI); Päivinen, Timo, 53850 Lappeenranta (FI); Rauma, Kimmo, 53850 Lappeenranta (FI); Heikkinen, Janne, 54100 Joutseno (FI); Lehti, Kalle, 48100 Kotka (FI); Ryynänen, Ville, 53300 Lappeenranta (FI); Turku, Juha, 53650 Lappeenranta (FI); Selesvuo, Jari, 53850 Lappeenranta (FI); Pyrhönen, Juha, 53850 Lappeenranta (FI)
(74) Representative: Finnpatent Oy

(56) References cited:
- EP-A1- 2 453 549
- JP-A- S5 674 072
- JP-A- 2010 226 815
- JP-U- S63 172 284
- US-A1- 2006 038 450
- US-A1- 2012 305 226

## Description

### Field of the invention

The invention relates generally to rotating electrical machines. More particularly, the invention relates to a stator of an electrical machine. Furthermore, the invention relates to an electrical machine for e.g. a mobile working machine. Furthermore, the invention relates to a mobile working machine.

### Background

Rotating electrical machines, such as motors and generators, generally comprise a rotor and a stator which are arranged such that a magnetic flux is developed between these two. In a radial flux electrical machine, the maximum torque is proportional to the product of the air-gap radius, the area of the air-gap surface, the magnetic flux density (Tesla) in the air-gap, and the linear current density (Amperes/meter) in air-gap surface of the stator. Hence, without increasing the mechanical size of the electrical machine, the maximum torque can be increased by increasing the linear current density because the magnetic flux density cannot practically be increased any more when it is above the saturation point of iron. Increasing the linear current density increases, however, the resistive losses in a stator winding that produces the above-mentioned linear current density, and therefore the cooling of the stator has to be made more effective.

An effective method for cooling a stator of an electrical machine is a liquid cooling where cooling liquid is in contact or at least in close vicinity of electrical conductors of stator windings. The liquid cooling of the stator windings is traditionally used in conjunction with large turbo-generators in which the electrical conductors of stator coils can be hollow so as to allow the cooling liquid to flow inside the electrical conductors. A general inconvenience related to liquid cooled stator windings is that manufacturing and assembling liquid cooled stator windings is more complex and expensive than manufacturing and assembling air cooled stator windings. Therefore, there is still a need for also other technical solutions for facilitating the cooling of the stator.

Document US 2006 003 84 50 A1 discloses a stator according to the preamble of claim 1. Document JP 2010 226 815 discloses a stator with thermally conductive aluminium sheets inserted between adjacent stator teeth.

### Summary

The present invention provides a stator according to claim 1. Further aspects of the invention are defined by the dependent claims.

The core structure comprises at least one cavity extending from a surface of the yoke to an interior of one of the stator teeth and including at least a part of a thermal conductor made of solid material whose thermal conductivity is greater than the thermal conductivity of the ferromagnetic material. Therefore, the thermal conductor is arranged to transfer heat from the stator tooth, and thereby also from the windings, to a spatial room outside the core structure.

In accordance with the invention, there is provided also a new mobile working machine comprising an electrical machine comprising a stator according to any of claims 1-10.

### Brief description of the figures

Exemplifying embodiments of the invention and their advantages are explained in greater detail below in the sense of examples and with reference to the accompanying drawings, in which:
figure 1a shows a section view of a part of an electrical machine according to an exemplifying embodiment of the invention, the section being taken along a plane perpendicular to the geometrical rotation axis of a rotor of the electrical machine,
figure 1b shows a view of a section taken along the line A-A shown in figure 1a,
figure 2a shows a section view of a part of an electrical machine according to an exemplifying embodiment of the invention, the section being taken along a plane perpendicular to the geometrical rotation axis of a rotor of the electrical machine,
figure 2b shows a view of a section taken along the line A-A shown in figure 2a; fig.2b shows an example not forming part of the invention,
figure 2c shows a section view of a part of an electrical machine according to an exemplifying embodiment of the invention,
figure 3a illustrates a stator of an electrical machine according to an example not forming part of the invention,
figure 3b shows a view of a section taken along the line A-A shown in figure 3a, and figure 4 shows an illustration of a mobile working machine according to an exemplifying embodiment of the invention.

### Description of the exemplifying embodiments

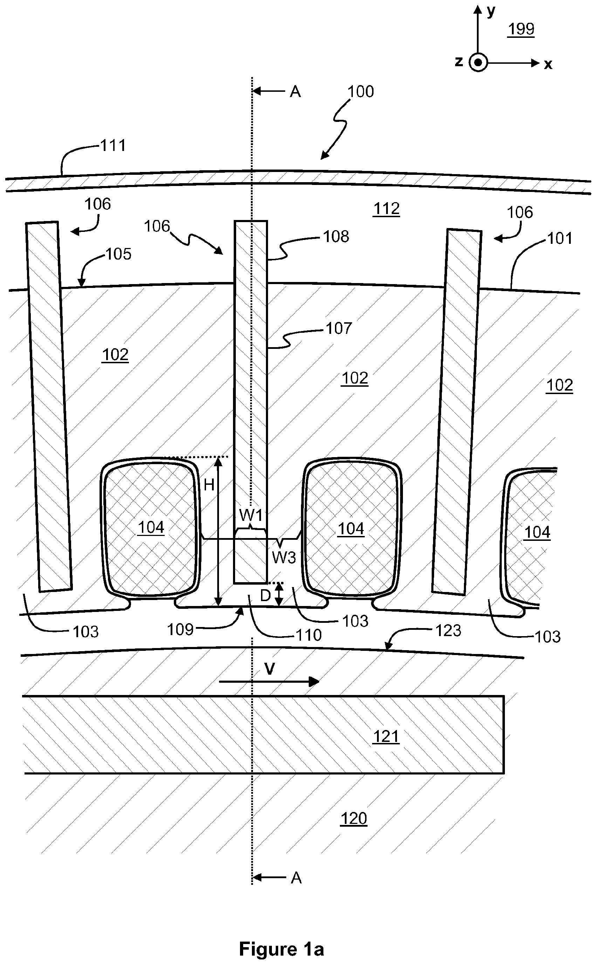

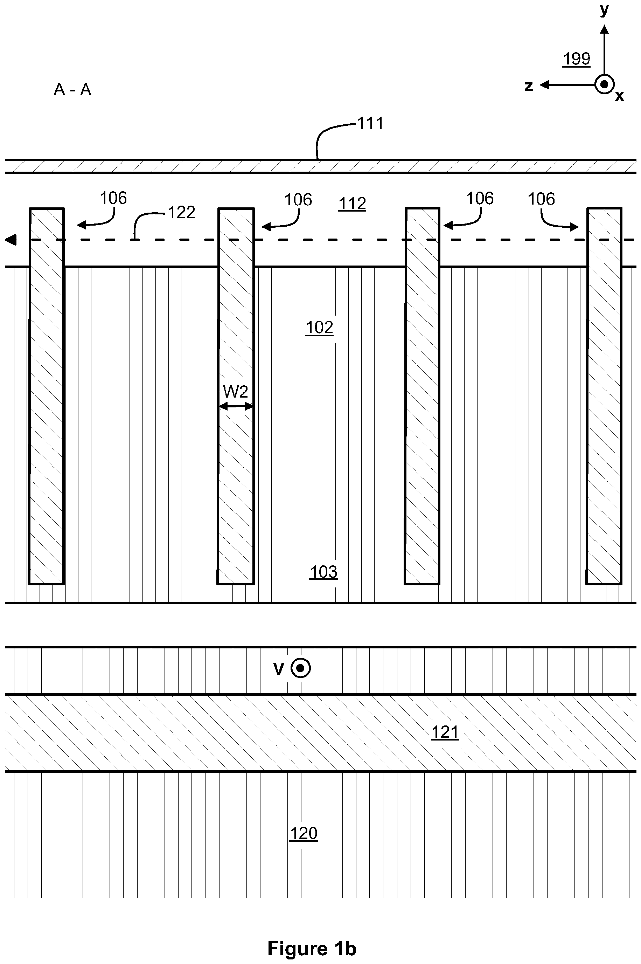

Stators according to exemplifying embodiments of the invention as well as according to examples not forming part of the invention are described below with references to figures 1a and 1b, figures 2a, 2b and 2c, and figures 3a and 3b. Figure 1a shows a section view of a part of an electrical machine according to an exemplifying embodiment of the invention, where the section has been taken along a plane parallel with the xy-plane of a coordinate system 199. Figure 1b shows a view of a section taken along the line A-A shown in figure 1a. The electrical machine comprises a rotor 120 and a stator 100. In the exemplifying case illustrated in figures 1a and 1b, the electrical machine is a permanent magnet electrical machine whose rotor 120 comprises permanent magnet material 121. The stator 100 comprises a core structure 101 made of ferromagnetic material and comprising a yoke 102 and stator teeth 103 connected to the yoke. The core structure 101 can be composed of ferromagnetic steel sheets stacked in the direction of the z-axis of the coordinate system 199. As another exemplifying alternative, the core structure 101 can be made of ferrite or iron powder composites such as SOMALOY® (Soft Magnetic Composite). The stator 100 comprises windings 104 located in stator slots between the stator teeth as illustrated in figure 1a. The core structure comprises cavities which extend from an outer surface 105 of the yoke to interiors of the stator teeth 103. Each of the cavities includes a part of a thermal conductor 106 made of solid material whose thermal conductivity is greater than the thermal conductivity of the ferromagnetic material of the core structure 101. The thermal conductors 106 are arranged to conduct heat from the stator teeth to a spatial room 112 surrounding the core structure 101. In the exemplifying case illustrated in figures 1a and 1b, every stator tooth is provided with many cavities and thermal conductors 106. As illustrated in figure 1b, the cavities and the thermal conductors related to a certain stator tooth are in line in a direction parallel with the stator slots, i.e. parallel with the z-axis of the coordinate system 199. However, it is also possible that not all of the stator teeth are provided with one or more cavities and corresponding thermal conductors. In some cases it may suffice, for example, that every second of the stator teeth, i.e. 50 % of the stator teeth, is provided with one or more cavities and corresponding thermal conductors.

In the exemplifying case illustrated in figures 1a and 1b, each thermal conductor 106 comprises a first portion 107 located in the respective cavity and a second portion 108 extending a distance outwards from the outer surface 105 of the yoke 102. In the exemplifying case illustrated in figures 1a and 1b, the second portion 108 has a substantially similar cross-section than the first portion 108, where the cross-section is taken along a spatial plane perpendicular to a distance between the air-gap surface 109 of the stator tooth and the outer surface of the yoke, i.e. along a spatial plane parallel to the xz-plane of the coordinate system 199. The second portion 108 is capable of transferring heat to coolant medium that can be arranged to be in the spatial room 112 surrounding the core structure 101. It is also possible that the whole thermal conductor is in the respective cavity when, for example, water or other effective coolant medium is arranged to remove heat from the thermal conductor. When water is used as the coolant medium, the outer surface 105 of the yoke is advantageously coated with a layer of suitable water resistant material so as to protect the core structure 101 against corrosion. The stator 100 may further comprise an outer casing 111 surrounding the core structure 101 and limiting the spatial room 112. A flow of the coolant medium is illustrated in figure 1b with a dashed line arrow 122.

In the exemplifying case illustrated in figures 1a and 1b, each stator tooth 103 comprises an isthmus 110 of the ferromagnetic material between the air-gap surface 109 of the stator tooth and the respective thermal conductor 106. Therefore, in the exemplifying case illustrated in figures 1a and 1b, the cavities are non-through holes.

The thermal conductors 106 are wider in a circumferential direction as in a direction parallel with the stator slots. Thus, the width W1 is greater than the width W2, where the width W1 is shown in figure 1a and the width W2 is shown in figure 1b. The width W2 is small in order to minimize eddy currents in the thermal conductors 106. The above-mentioned circumferential direction is a direction of movement of the air-gap surface 123 the rotor 120 of the electrical machine when the rotor is rotating. In figures 1a and 1b, the direction of movement of the air-gap surface the rotor is denoted with an arrow V. In figures 1a and 1b, the circumferential direction is substantially parallel with the x-axis of the coordinate system 199, and the above-mentioned direction parallel with the stator slots is substantially parallel with the z-axis of the coordinate system 199.

In a stator according to an exemplifying embodiment of the invention, a distance D between the thermal conductor 106 and the air-gap surface 109 of the respective stator tooth is on a range 5 % ... 90 % of the height H of the stator tooth. The distance D and the height H of the stator tooth are illustrated in figure 1a.

In a stator according to an exemplifying embodiment of the invention, the width W1 of the thermal conductor is on a range 10 %...60 % of the corresponding width W3 of the stator tooth where the width W3 of the stator tooth is measured at a same distance from the rotational axis of the rotor as the width W1 as illustrated in figure 1a.

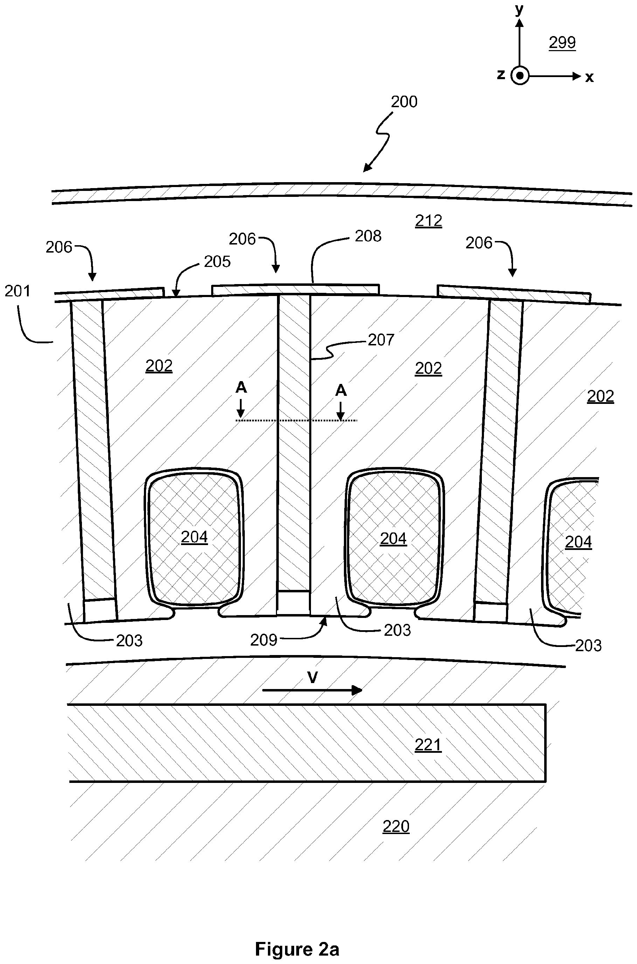

Figure 2a shows a section view of a part of an electrical machine according to an exemplifying embodiment of the invention, where the section has been taken along a plane parallel with the xy-plane of a coordinate system 299. The electrical machine comprises a rotor 220 and a stator 200. In the exemplifying case illustrated in figure 2a, the electrical machine is a permanent magnet electrical machine whose rotor 220 comprises permanent magnet material 221. The stator 200 comprises a core structure 201 made of ferromagnetic material and comprising a yoke 202 and stator teeth 203 connected to the yoke. The stator 200 comprises windings 204 located in stator slots between the stator teeth as illustrated in figure 2a. The core structure comprises cavities 206 which extend from the outer surface 205 of the yoke through the interiors of the stator teeth to the air-gap surfaces 209 of the stator teeth. Therefore, in the exemplifying case illustrated in figure 2a, the cavities are through holes. Each of the cavities includes a part of a thermal conductor 206 made of solid material whose thermal conductivity is greater than the thermal conductivity of the ferromagnetic material of the core structure 201. The thermal conductors 206 are arranged to conduct heat from the stator teeth to a spatial room 212 surrounding the core structure 201.

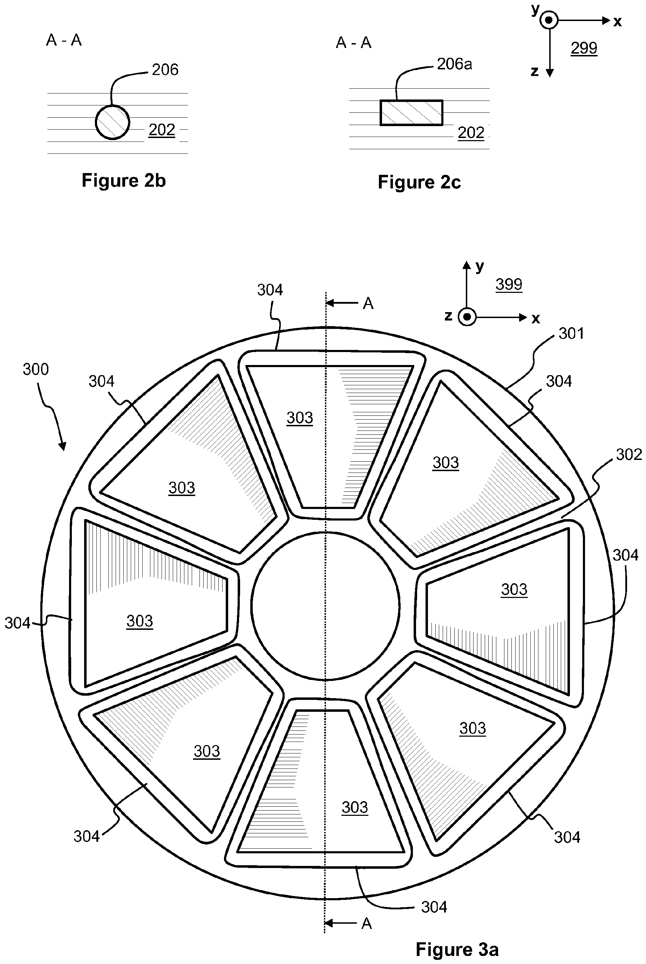

In the exemplifying case illustrated in figures 2a and 2b, each thermal conductor 206 comprises a first portion 207 located in the respective cavity and a second portion 208 extending a distance outwards from the outer surface 205 of the yoke 202. In the exemplifying case illustrated in figures 2a and 2b, the second portion 208 extends, along the outer surface 205 of the yoke, a distance away from the respective cavity.

The cross-section of the part of the thermal conductor 206 that is inside the cavity is rectangular. The cross-section is taken along a spatial plane perpendicular to a distance between the air-gap surface 209 of the stator tooth and the outer surface of the yoke, i.e. along a spatial plane parallel with the xz-plane of the coordinate system 299. Figure 2b - as an example not forming part of the invention - shows a view of a section taken along the line A-A shown in figure 2a. Thus, figure 2b shows a circular cross-section of the thermal conductor 206. It is to be noted that the cross-section of the thermal conductor according to the invention is rectangular. This is illustrated in figure 2c which shows a section view corresponding to that shown in figure 2b but taken from an electrical machine according to an exemplifying embodiment of the invention. The cross-section of a thermal conductor 206a shown in figure 2c is rectangular so that the thermal conductor is wider in the direction parallel to the x-axis of the coordinate system 299, i.e. in the circumferential direction, than in the direction parallel with the z-axis of the coordinate system 299, i.e. in the axial direction.

The stators 100 and 200 illustrated in figures 1a, 1b, 2a, 2b, and 2c are suitable for radial flux electrical machines which are inner rotor machines and where the cavities and the thermal conductors are advantageously radially directed from the outer surface of the yoke to the interiors of the stator teeth. It is straightforward to understand that similar cavities and thermal conductors can be used also in conjunction with radial flux electrical machines which are outer rotor machines.

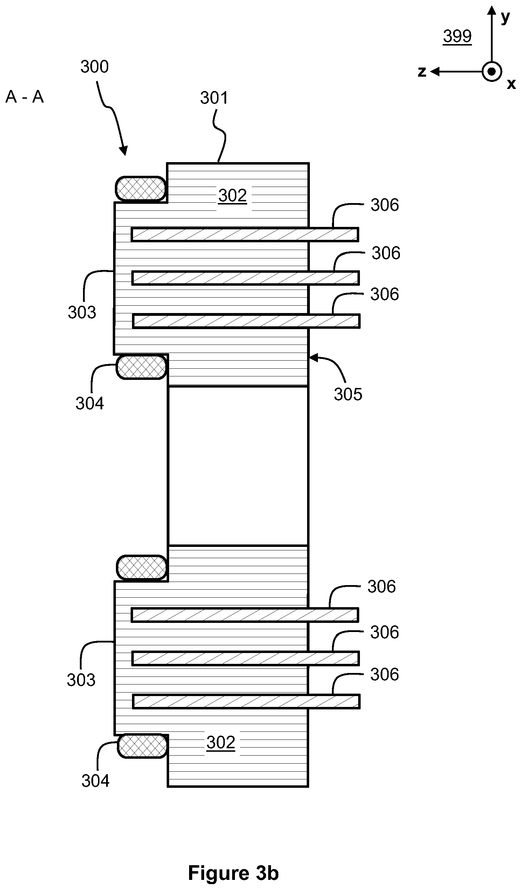

Figure 3a illustrates a stator 300 of an axial flux electrical machine according to an example not forming part of the invention, and figure 3b shows a view of a section taken along the line A-A shown in figure 3a. The stator 300 comprises a core structure 301 made of ferromagnetic material and comprising a yoke 302 and stator teeth 303 connected to the yoke. The stator comprises windings 304 located at least partially in stator slots between the stator teeth. As illustrated in figure 3b, the core structure 301 comprises cavities extending in an axial direction from an outer surface 305 of the yoke to interiors of the stator teeth. The axial direction is parallel with the z-axis of a coordinate system 399. Each cavity includes at least a part of a thermal conductor 306 made of solid material whose thermal conductivity is greater than the thermal conductivity of the ferromagnetic material.

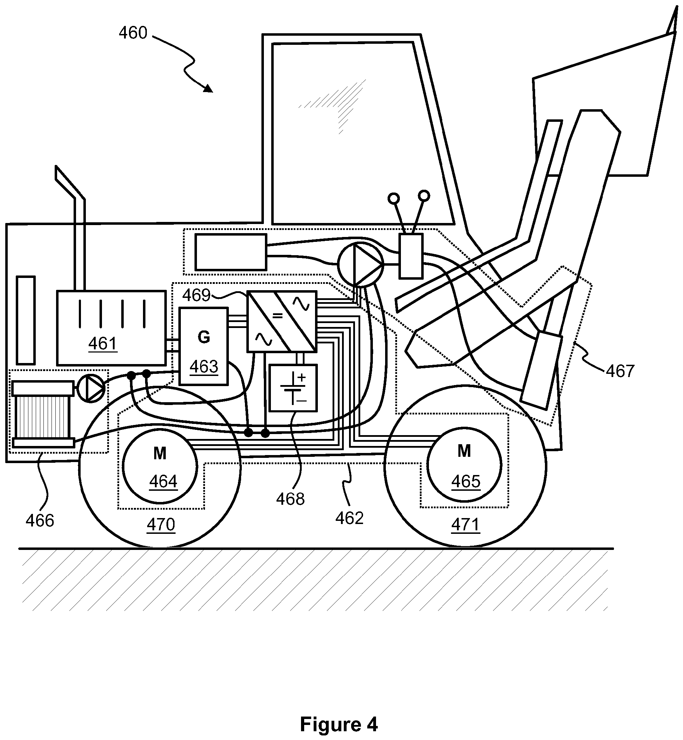

Figure 4 shows an illustration of a mobile working machine 460 according to an exemplifying embodiment of the invention. In this exemplifying case, the mobile working machine is a bucket charger but the mobile working machine could as well be a tractor, a road drag, a bulldozer, or any other working machine having wheels and/or chain tracks. The mobile working machine comprises a combustion engine 461 that can be e.g. a diesel engine, an Otto-cycle engine, or a turbine engine. The mobile working machine comprises an electromechanical power transmission chain 462 between the combustion engine and wheels 470, 471 of the mobile working machine. The electromechanical transmission chain comprises an electrical machine 463 the rotor of which is connected to the shaft of the combustion engine 461. The electromechanical transmission chain further comprises a frequency converter 469 and electrical machines 464, 465 at the hubs of the wheels of the mobile working machine. The frequency converter 469 is arranged to convert the electrical voltage produced by the electrical machine 463 into electrical voltages having amplitudes and frequencies suitable for the electrical machines 464, 465. The frequency converter may have separate output stages for all the electrical machines 464, 465 in which case each of these electrical machines can be controlled individually, or all the electrical machines 464, 465 can be connected to one and the same output stage of the frequency converter in which case these electrical machines are controlled as a group. One or more of the electrical machines 463, 464, 465 comprise a stator according to claim 1. A mobile working machine according to an exemplifying embodiment of the invention comprises a liquid cooling system 466 arranged to cool the electromechanical power transmission chain 462.

A mobile working machine according to an exemplifying embodiment of the invention comprises a liquid cooling system arranged to cool both a hydraulic system 467 of the mobile working machine and the electromechanical power transmission chain 462.

A mobile working machine according to an exemplifying embodiment of the invention comprises a liquid cooling system arranged to cool both the electromechanical power transmission chain 462 and the combustion engine 461. In a mobile working machine according to an exemplifying embodiment of the invention, the electromechanical power transmission chain comprises a battery 468 and/or an electric double-layer capacitor arranged to respond to peak power needs exceeding the maximum power of the combustion engine 461. The battery and/or the electric double-layer capacitor can be connected, for example, to a direct voltage intermediate circuit of the frequency converter 469. An electric double-layer capacitor is often called a "super capacitor".

## Claims

1. A stator (100, 200) for a radial flux electrical machine, the stator comprising:
- a core structure (101, 201) made of ferromagnetic material and comprising a yoke (102, 202) and stator teeth (103, 203) connected to the yoke, and
- windings (104, 204) at least partially located in stator slots between the stator teeth, wherein the core structure comprises at least one cavity extending from a surface (105, 205) of the yoke to an interior of one of the stator teeth and including at least a part of a thermal conductor (106, 206) made of solid material whose thermal conductivity is greater than thermal conductivity of the ferromagnetic material,
**characterized in that** the thermal conductor (106, 206) has a rectangular cross-section within the cavity such that the thermal conductor is wider in a circumferential direction (W1) than in a direction (W2) parallel with a stator slot beside the one of the stator teeth (103, 203), the circumferential direction being a direction of movement of an air-gap surface a rotor of the electrical machine when the rotor is rotating.

2. A stator according to claim 1, wherein the thermal conductor comprises a first portion (107, 207) located in the cavity and a second portion (108, 208) extending a distance outwards from the surface of the yoke.

3. A stator according to claim 2, wherein the second portion (208) extends, along the surface of the yoke, a distance away from the cavity.

4. A stator according to any of claims 1-3, wherein a distance (D) between the thermal conductor and an air-gap surface of the one of the stator teeth is on a range 5 % ... 90 % of a height (H) of the one of the stator teeth.

5. A stator according to any of claims 1-4, wherein a width (W1) of the thermal conductor is on a range 10 %...60 % of a corresponding width (W3) of the one of the stator teeth, the widths of the thermal conductor and the one of the stator teeth being measured in a direction of movement of an air-gap surface a rotor of the electrical machine and at a same distance from a rotational axis of the rotor.

6. A stator according to any of claims 1-5, wherein the one of the stator teeth comprises an isthmus (110) of the ferromagnetic material between the thermal conductor and an air-gap surface of the one of the stator teeth so that the cavity is a non-through hole.

7. A stator according to any of claims 1-6, wherein there are two or more cavities and thermal conductors (106) that extend from the surface of the yoke (102) to the interior of the one of the stator teeth so that the two or more cavities are in line in a direction parallel with a stator slot beside the one of the stator teeth.

8. A stator according to any of claims 1-7, wherein there is a plurality of cavities and thermal conductors (106) so that at least every second of the stator teeth is provided with one or more of the cavities and one or more of the thermal conductors.

9. A stator according to any of claims 1-8, wherein the stator comprises an outer casing (111) surrounding the core structure so that there is a spatial room (112) for coolant medium between the outer casing and the yoke.

10. A stator according to any of claims 1-9, wherein the cavity is radially directed from the surface of the yoke to the interior of the one of the stator teeth.

11. A mobile working machine (460) comprising:
- a combustion engine (461), and
- an electromechanical power transmission chain (462) between the combustion engine and one or more actuators of the mobile working machine,
wherein the electromechanical transmission chain comprises at least one electrical machine (463-465) comprising a stator according to any of claims 1-10 and a rotor.

## Patentansprüche

1. Stator (100, 200) für eine elektrische Maschine mit Radialfluss, wobei der Stator umfasst:
- eine Kernstruktur (101, 201), welche aus einem ferromagnetischen Material hergestellt ist und ein Joch (102, 202) und Statorzähne (103, 203) umfasst, welche mit dem Joch verbunden sind, und
- Wicklungen (104, 204), welche zumindest teilweise in Statoraussparungen zwischen den Statorzähnen angeordnet sind, wobei die Kernstruktur zumindest einen Hohlraum umfasst, der sich von einer Oberfläche (105, 205) des Jochs in einen Innenraum eines der Statorzähne erstreckt und zumindest einen Teil eines Wärmeleiters (106, 206) einschließt, welcher aus einem festen Material hergestellt ist, dessen Wärmeleitfähigkeit größer ist als die Wärmeleitfähigkeit des ferromagnetischen Materials, **dadurch gekennzeichnet, dass** der Wärmeleiter (106, 206) einen rechteckigen Querschnitt innerhalb des Hohlraums der Art aufweist, dass der Wärmeleiter in einer Umfangsrichtung (W1) breiter ist als in einer Richtung (W2) parallel zu einer Statoraussparung neben dem einen der Statorzähne (103, 203), wobei die Umfangsrichtung eine Bewegungsrichtung einer Luftspaltoberfläche eines Rotors der elektrischen Maschine ist, wenn sich der Rotor dreht.

2. Stator nach Anspruch 1, wobei der Wärmeleiter einen ersten Abschnitt (107, 207), welcher in dem Hohlraum angeordnet ist, und einen zweiten Abschnitt (108, 208) umfasst, welcher sich um eine Strecke nach außen von der Oberfläche des Jochs erstreckt.

3. Stator nach Anspruch 2, wobei sich der zweite Abschnitt (208) um eine Strecke entlang der Oberfläche des Jochs von dem Hohlraum weg erstreckt.

4. Stator nach einem der Ansprüche 1-3, wobei ein Abstand (D) zwischen dem Wärmeleiter und einer Luftspaltoberfläche des einen der Statorzähne in einem Bereich 5% ... 90% einer Höhe (H) des einen der Statorzähne liegt.

5. Stator nach einem der Ansprüche 1-4, wobei eine Breite (W1) des Wärmeleiters in einem Bereich 10% ... 60% einer entsprechenden Breite (W3) des einen der Statorzähne liegt, wobei die Breiten des Wärmeleiters und des einen der Statorzähne in einer Bewegungsrichtung einer Luftspaltoberfläche eines Rotors der elektrischen Maschine und bei einem gleichen Abstand von einer Drehachse des Rotors gemessen werden.

6. Stator nach einem der Ansprüche 1-5, wobei der eine der Statorzähne einen Isthmus (110) aus dem ferromagnetischen Material zwischen dem Wärmeleiter und einer Luftspaltoberfläche des einen der Statorzähne umfasst, so dass der Hohlraum ein nichtdurchgehendes Loch ist.

7. Stator nach einem der Ansprüche 1-6, wobei es zwei oder mehr Hohlräume und Wärmeleiter (106) gibt, welche sich von der Oberfläche des Jochs (102) in den Innenraum des einen der Statorzähne erstrecken, so dass die zwei oder mehr Hohlräume in einer Linie in einer Richtung parallel zu einer Statoraussparung neben dem einen der Statorzähne sind.

8. Stator nach einem der Ansprüche 1-7, wobei es eine Mehrzahl von Hohlräumen und Wärmeleitern (106) gibt, so dass zumindest jeder zweite der Statorzähne mit einem oder mehreren der Hohlräume und einem oder mehreren der Wärmeleiter versehen ist.

9. Stator nach einem der Ansprüche 1-8, wobei der Stator ein die Kernstruktur umgebendes äußeres Gehäuse (111) umfasst, so dass es einen räumlichen Abstand (112) für Kühlmedium zwischen dem äußeren Gehäuse und dem Joch gibt.

10. Stator nach einem der Ansprüche 1-9, wobei der Hohlraum radial von der Oberfläche des Jochs in den Innenraum des einen der Statorzähne gerichtet ist.

11. Mobile Arbeitsmaschine (460), umfassend:
- einen Verbrennungsmotor (461), und
- eine elektromechanische Kraftübertragungskette (462) zwischen dem Verbrennungsmotor und einem oder mehreren Aktuatoren der mobilen Arbeitsmaschine, wobei die elektromechanische Übertragungskette zumindest eine elektrische Maschine (463-465) umfasst, welche einen Stator nach einem der Ansprüche 1-10 und einen Rotor umfasst.

## Revendications

1. Stator (100, 200) pour une machine électrique à flux radial, le stator comprenant :
- une structure de noyau (101, 201) constituée d'un matériau ferromagnétique et comprenant une culasse (102, 202) et des dents de stator (103, 203) raccordées à la culasse, et
- des enroulements (104, 204) situés au moins partiellement dans des encoches de stator entre les dents de stator, dans lequel la structure de noyau comprend au moins une cavité s'étendant depuis une surface (105, 205) de la culasse vers un intérieur de l'une des dents de stator et incluant au moins une partie d'un conducteur thermique (106, 206) constitué d'un matériau solide dont la conductivité thermique est plus grande que la conductivité thermique du matériau ferromagnétique, **caractérisé en ce que** le conducteur thermique (106, 206) a une section rectangulaire au sein de la cavité si bien que le conducteur thermique est plus large dans une direction circonférentielle (W1) que dans une direction (W2) parallèle à une encoche de stator à côté de ladite une des dents de stator (103, 203), la direction circonférentielle étant une direction de déplacement d'une surface d'entrefer un rotor de la machine électrique lorsque le rotor tourne.

2. Stator selon la revendication 1, dans lequel le conducteur thermique comprend une première portion (107, 207) située dans la cavité et une seconde portion (108, 208) s'étendant à une distance vers l'extérieur depuis la surface de la culasse.

3. Stator selon la revendication 2, dans lequel la seconde portion (208) s'étend le long de la surface de la culasse, à une distance éloignée de la cavité.

4. Stator selon l'une quelconque des revendications 1 à 3, dans lequel une distance (D) entre le conducteur thermique et une surface d'entrefer de ladite une des dents de stator est sur une plage de 5 % ... 90 % d'une hauteur (H) de ladite une des dents de stator.

5. Stator selon l'une quelconque des revendications 1 à 4, dans lequel une largeur (W1) du conducteur thermique est sur une plage de 10 % ... 60 % d'une largeur (W3) correspondante de ladite une des dents de stator, les largeurs du conducteur thermique et de ladite une des dents de stator étant mesurées dans une direction de déplacement d'une surface d'entrefer d'un rotor de la machine électrique et à une même distance depuis un axe de rotation du rotor.

6. Stator selon l'une quelconque des revendications 1 à 5, dans lequel ladite une des dents de stator comprend un isthme (110) du matériau ferromagnétique entre le conducteur thermique et une surface d'entrefer de ladite une des dents de stator pour que la cavité soit un trou non traversant.

7. Stator selon l'une quelconque des revendications 1 à 6, dans lequel il existe deux cavités et conducteurs thermiques (106) ou plus qui s'étendent depuis la surface de la culasse (102) jusqu'à l'intérieur de ladite une des dents de stator pour que les deux cavités ou plus soient alignées dans une direction parallèle à une encoche de stator à côté de ladite une des dents de stator.

8. Stator selon l'une quelconque des revendications 1 à 7, dans lequel il existe une pluralité de cavités et de conducteurs thermiques (106) pour qu'au moins une dent sur deux des dents de stator soit pourvue d'une ou de plusieurs des cavités et d'un ou de plusieurs des conducteurs thermiques.

9. Stator selon l'une quelconque des revendications 1 à 8, dans lequel le stator comprend un boîtier externe (111) entourant la structure de noyau pour qu'il y ait une chambre spatiale (112) pour milieu de refroidissement entre le boîtier externe et la culasse.

10. Stator selon l'une quelconque des revendications 1 à 9, dans lequel la cavité est radialement orientée depuis la surface de la culasse jusqu'à l'intérieur de ladite une des dents de stator.

11. Machine de travail mobile (460) comprenant :
- un moteur à combustion (461), et
- une chaîne de transmission de puissance électromécanique (462) entre le moteur à combustion et un ou plusieurs actionneurs de la machine de travail mobile, dans lequel la chaîne de transmission électromécanique comprend au moins une machine électrique (463 à 465) comprenant un stator selon l'une quelconque des revendications 1 à 10 et un rotor.
